# EUROPEAN PATENT SPECIFICATION

(11) **EP 2 028 898 B1**
(45) Date of publication and mention of the grant of the patent: **30.10.2013**
(21) Application number: 07114719.3
(22) Date of filing: 21.08.2007
(51) Int. Cl.: H04L 29/08, H04W 36/00

(54) **System and method for handing over sessions between networks**
System und Verfahren zur Weiterleitung von Sitzungen zwischen Netzwerken
Système et procédé pour le transfert de sessions entre des réseaux

(30) Priority: 03.08.2007 US 833624
(43) Date of publication of application: 25.02.2009
(73) Proprietor: BlackBerry Limited, Waterloo, ON N2L 3W8 (CA)
(72) Inventor: Purnadi, Rene W, Coppell, TX 75019 (US); Islam, M. Khaledul, Ottawa, Ontario K2K 3N4 (CA); Buckley, Adrian, Tracy, 95376 (US)
(74) Representative: Howson, Richard G.B.

(56) References cited:
- WO-A-2005/055502
- WO-A-2006/118489
- US-B1- 6 970 474
- 3GPP: "Voice Call Continuity between CS and IMS Study (Release 7)" INTERNET CITATION, [Online] XP002359017 Retrieved from the Internet: URL:www.3gpp.org> [retrieved on 2005-12-14]

## Description

Easily transportable devices with wireless telecommunications capabilities, such as mobile telephones, personal digital assistants, handheld computers, and similar devices, will be referred to herein as wireless devices. The term "wireless device" may refer to a device and its associated Universal Integrated Circuit Card (UICC) that includes a Subscriber Identity Module (SIM) application, a Universal Subscriber Identity Module (USIM) application, or a Removable User Identity Module (R-UIM) application or may refer to the device itself without such a card. A wireless device might communicate with a second wireless device, some other element in a telecommunications network, an automated computing device such as a server computer, or some other device, any of which can be referred to as a correspondent node. A communications connection between a wireless device and a correspondent node might promote a voice call, a file transfer, or some other type of data exchange, any of which can be referred to as a call or a session.

Some wireless devices communicate in a circuit switched mode, wherein a dedicated communication path exists between two devices. For the duration of a call or session, all data exchanged between the two devices travels along the single path. Some wireless devices have the capability to communicate in a packet switched mode, wherein a data stream representing a portion of a call or session is divided into packets that are given unique identifiers. The packets might then be transmitted from a source to a destination along different paths and might arrive at the destination at different times. Upon reaching the destination, the packets are reassembled into their original sequence based on the identifiers.

Communications that take place via circuit switching can be said to occur in the circuit switched domain and communications that take place via packet switching can be said to occur in the packet switched domain. Some wireless devices may be capable of communicating in both the circuit switched domain and the packet switched domain. As a user of such a wireless device travels, the device might be required to move from a circuit switched domain to a packet switched domain or from a packet switched domain to a circuit switched domain. When a requirement for a transition from one domain to another occurs as a result of a change in the underlying wireless communication networks or for other reasons, a handover may need to take place to transfer a call from one type of network to another.

Within each domain, several different types of networks, protocols, or technologies can be used. In some cases, the same network, protocol, or technology can be used in both domains. The wireless communication networks may be based on Code Division Multiple Access (CDMA), Time Division Multiple Access (TDMA), Frequency Division Multiple Access (FDMA), Orthogonal Frequency Division Multiplexing (OFDM), or some other multiple access scheme. A CDMA-based network may implement one or more standards such as 3GPP2 IS-2000 (commonly referred to as CDMA 1x), 3GPP2 IS-856 (commonly referred to as CDMA 1xEV-DO), or 3GPP UMTS (Universal Mobile Telecommunications System). A TDMA-based network may implement one or more standards such as 3GPP Global System for Mobile Communications (GSM) or 3GPP General Packet Radio Service (GPRS).

GSM is an example of a wireless network standard that uses only the circuit switching mode. Examples of wireless network standards that use only packet switching include GPRS, CDMA 1x EV-DO, Worldwide Interoperability for Microwave Access (WiMAX), and Wireless Local Area Network (WLAN), which might comply with Institute of Electrical and Electronics Engineers (IEEE) standards such as 802.16, 802.16e, 802.11a, 802.11b, 802.11g, 802.11 n, and similar standards. Examples of wireless network standards that may use both circuit switching and packet switching modes include CDMA 1x and UMTS. An example of an application-layer protocol that can be used in a packet switching wireless network is the Session Initiation Protocol (SIP). SIP has been standardized and governed primarily by the Internet Engineering Task Force (IETF). The IP (Internet Protocol) Multimedia Subsystem (IMS) is a packet switched technology that allows multimedia content to be transmitted between wireless devices.

WO 2006/118489 A1 (Ericsson) discloses a method to be used by a radio network controller for assisting a handover of a data session from a first routing path, associated with a first access network, to an alternative routing path, associated with an alternative access network. Data is routed over the first access network to a user terminal by binding a session identifier to a first routing identifier, wherein the session identifier and the first routing identifier are defined in accordance with a standard protocol routing scheme of the first access network.

### GENERAL

In an embodiment, a system according to claim 1 may be provided. The system may include a component to assign a unique session identifier to each of a plurality of sessions between a wireless device and a correspondent node.

In another embodiment, a method according to claim 22 for handing over a session between networks may be provided. The method may include providing a first identifier for a first session between a wireless device and a correspondent node and providing a second identifier for a second session between the wireless device and the correspondent node. When one of the first and second sessions is handed over from a packet switched network to another network, one of the first and second identifiers may be used to specify which of the first and second sessions to hand over.

In another embodiment, a system for handing over a session from a packet switched network to another network may be provided. The system may include a correspondent node and a wireless device. The wireless device may have a plurality of sessions with the correspondent node in the packet switched network. A unique session identifier may be assigned to each of the plurality of sessions.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.

Figure 1 is a block diagram of a telecommunications system according to an embodiment of the disclosure.

Figure 2 is a call flow diagram for a call anchored at a VCC server prior to handover from a packet switched network to another network according to an embodiment of the disclosure.

Figure 3 is a call flow diagram for a call anchored at a VCC server prior to handover from a packet switched network to another network according to an alternative embodiment of the disclosure.

Figure 4 is a diagram of a method for handing over a session between networks according to an embodiment of the disclosure.

Figure 5 is a diagram of a wireless communications system including a wireless device operable for some of the various embodiments of the disclosure.

Figure 6 is a block diagram of a wireless device operable for some of the various embodiments of the disclosure.

Figure 7 is a diagram of a software environment that may be implemented on a wireless device operable for some of the various embodiments of the disclosure.

### DESCRIPTION OF PREFERRED EMBODIMENTS

It should be understood at the outset that although illustrative implementations of one or more embodiments of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

Some networks in the packet switched domain can maintain multiple concurrent sessions with a correspondent node. For example, in one of these networks, a user could use a wireless device to carry on a voice over Internet Protocol (VoIP) conversation with a correspondent node in a first session while concurrently sending a data file to the same correspondent node in a second session. In the circuit switched domain, on the other hand, only one session can be maintained between a wireless device and a correspondent node at any one time. Also, in some networks in the packet switched domain, only a reduced number of sessions can be maintained between a wireless device and a correspondent node at any one time. For example, due to resource constraints, pricing structures, or other factors, a packet switched network might be able to handle only one session at a time or a user might want to keep only one session at a time. When a wireless device in the packet switched domain is engaged in multiple concurrent sessions with a correspondent node and a handover needs to occur to the circuit switched domain or to a packet switched network that can handle only one session at a time, only one of the sessions can be handed over.

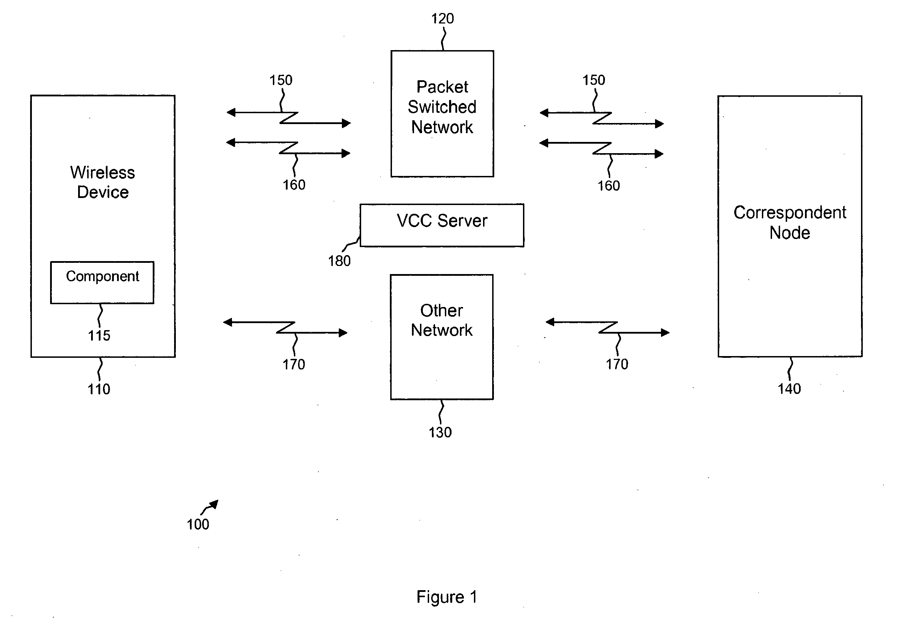

Figure 1 is a block diagram of an embodiment of a system 100 that includes a wireless device 110 that is capable of communicating in both a packet switched network 120 and another network 130. The wireless device 110 might be a wireless device as defined above or some other node with similar capabilities. The packet switched network 120 might be any type of network that is capable of handling multiple concurrent sessions. The other network 130 might be a circuit switched network, a packet switched network that is capable of handling only one session at a time, or some other type of network that is capable of handling only one session at a time. The wireless device 110 is in communication with a correspondent node 140, which might be a second wireless device, some other element in a telecommunications network, an automated computing device such as a server computer, or some other device with which the wireless device 110 can communicate.

At a first time, the wireless device 110 might be concurrently conducting a first session 150 and a second session 160 with the correspondent node 140 via the packet switched network 120. If, at a second time, the wireless device 110 moves out of range of the packet switched network 120 and into range of the other network 130, a handover to the other network 130 might need to occur. A solitary session 170 would then be initiated between the wireless device 110 and the correspondent node 140, via either a circuit switched network or a packet switched network that is capable of handling only one session at a time.

In the case where the other network 130 is a circuit switched network, a network component 180 can handle the procedures related to handovers between the packet switched network 120 and the other network 130. In one embodiment, the network component 180 is a voice call continuity (VCC) server. In another embodiment, the network component 180 is a circuit switched adaptation function (CSAF) domain transfer function (DTF) that follows the 3rd Generation Partnership Project (3GPP) technical specification (TS) 23.206. In yet another embodiment, the network component 180 is an ICCF (IMS CS (circuit switched) control function) that follows the 3GPP technical realization 23.892. In still other embodiments, the network component 180 might be some other component that allows transfer of a call or session between the packet switched network 120 and the other network 130, if necessary. Hereinafter, any component that can perform such a function will be referred to as a VCC server 180. As used herein, the term 'handover' refers to the invocation of a VCC function or similar function for the continuation of a session. Although the VCC server 180 is depicted as an independent component, one of skill in the art will recognize that portions of the functionality of the VCC server 180 might reside in equipment associated with the packet switched network 120 and/or the other network 130.

Since only the single solitary session 170 is possible between the wireless device 110 and the correspondent node 140 in the other network 130, only one of the first packet switched session 150 and the second packet switched session 160 can be handed over to the other network 130 to become the solitary session 170. If the wireless device 110 moved from the packet switched network 120 to the other network 130, a designation would need to be made regarding whether the first packet switched session 150 or the second packet switched session 160 should be handed over.

Embodiments of the present disclosure provide identifiers for packet switched sessions, such as the first packet switched session 150 and the second packet switched session 160. The identifiers can then be used to designate which one of multiple concurrent packet switched sessions is to be handed over to the other network 130 when a handover from the packet switched network 120 occurs.

In one embodiment, for the case where the other network 130 is a circuit switched network, a session identifier is included in the handover procedures carried out by the VCC server 180. For example, when a handover from the packet switched network 120 to the other network 130 occurs, a session identifier could be included in the handover message that the wireless device 110 uses to initiate the handover. This message might be sent to a mobile switching center (MSC) and the session identifier might be included in the handover message that the MSC forwards to the VCC server 180. This allows the VCC server 180 to know which packet switched session is to be handed over to the other network 130. If the SIP protocol is used to set up the packet switched sessions, the SIP Call-ID parameter can be used as the session identifier. This session identifier could be carried in the User to User Signaling part of the Setup message from the wireless device 110 to the MSC and then in the Initial Address Message (IAM) from the MSC.

In the case where the other network 130 is another packet switched network, the session identifier of the handed over session can be included in a handover message, such as a SIP Re-Invite message, to indicate to a component in the other packet switched network (e.g., a call session control function (CSCF) in an IMS network) which session is to be handed over. If the SIP protocol is used to set up the packet switched sessions, the SIP Call-ID parameter can be used as the session identifier. If the session is anchored at the VCC server 180, the CSCF informs the VCC server 180 of the session identifier of the handed over session, for example, the Call-ID parameter that might be related to a VCC domain transfer number (VDN).

In an embodiment, the wireless device 110 might include a component 115 that is capable of generating the session identifier and including the session identifier in the handover message. In other embodiments, the component 115 that generates the session identifier and includes the session identifier in the handover message might reside in the VCC server 180 or elsewhere. Each session identifier is exchanged between the session identifier generator or component 115 and the session identifier receiver (the wireless device 110 if the component 115 is in the VCC server 180 or the VCC server 180 if the component 115 is in the wireless device 110) prior to the handover.

In an alternative embodiment of the cases where the packet switched sessions are anchored at the VCC server 180, a unique domain transfer number is assigned to each packet switched session. Under the current VCC procedures, when the other network 130 is a circuit switched network, the VCC server 180 assigns a VDN (an E.164 number) to each of the wireless devices 110 involved in a packet switched session. When a single session is in progress on the wireless device 110 and a handover of the session from the packet switched network 120 to the other network 130 occurs, the wireless device 110 that initiates the handover includes the VDN in the handover message. The presence of the VDN indicates to the VCC server 180 that the request is for a domain transfer rather than for anchoring a new call. However, when multiple sessions are in progress on the wireless device 110, the single VDN assigned to the wireless device 110 cannot be used to distinguish which of the sessions is to be handed over.

In an embodiment, rather than the VDN being assigned to the wireless device 110, a VDN is assigned to each packet switched session on the wireless device 110 that is anchored at the VCC server 180. When a call is handed over from the packet switched network 120 to the other network 130, a session-based VDN is used to indicate not only the wireless device 110 that initiated the handover but also the packet switched session that is to be handed over. In the case where the other network 130 is a circuit switched network, the session-based VDN can be included in the setup message that triggers the handover from the packet switched network 120 to the circuit switched network 130. A component, such as the component 115, that manages handovers in this manner might be maintained in the VCC server 180, in the wireless device 110, or elsewhere.

Appropriate modifications may be made to the VCC server 180 to allow the VCC server 180 to assign VDNs on a per-session basis rather than on a perwireless device 110 basis and to assign the VDNs upon the initiation of each session rather than upon the registration of the wireless device 110. Appropriate modifications may also be made to the handover messages sent to and from the wireless device 110 to accommodate the session-based VDNs. The wireless device 110 and the VCC server 180 might be modified to recognize the modified messages that trigger the handover.

In one alternative, if SIP is used as the packet switching protocol, appropriate modifications might be made to the SIP Invite message and the SIP 2000K message to accommodate the assignment of a VDN to each packet switched session and the delivery of the VDNs to the wireless device 110. When a session is initiated by a SIP Invite message from the wireless device 110 to the VCC server 180, the VCC server 180 might assign a VDN to the session by including the VDN in a SIP 2000K message that the VCC server 180 returns to the wireless device 110.

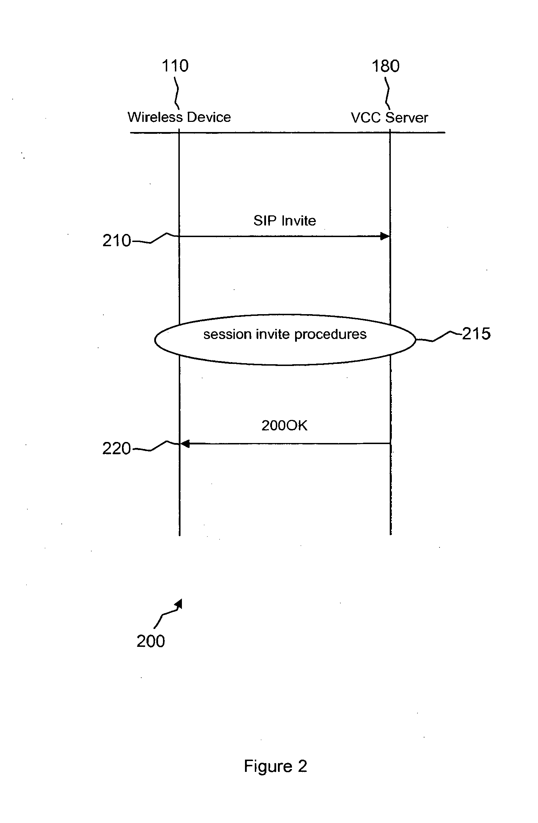

Figure 2 is a call flow diagram 200 depicting an example of a series of events that might occur in such an embodiment. At event 210, the wireless device 110 sends a SIP Invite message to the VCC server 180 to anchor a new session. Standard SIP session invite procedures then occur at event 215. When the standard invite procedures are complete, the VCC server 180 sends the wireless device 110 a SIP 2000K message at event 220. The SIP 2000K message can include the VDN that is to be used to identify the session.

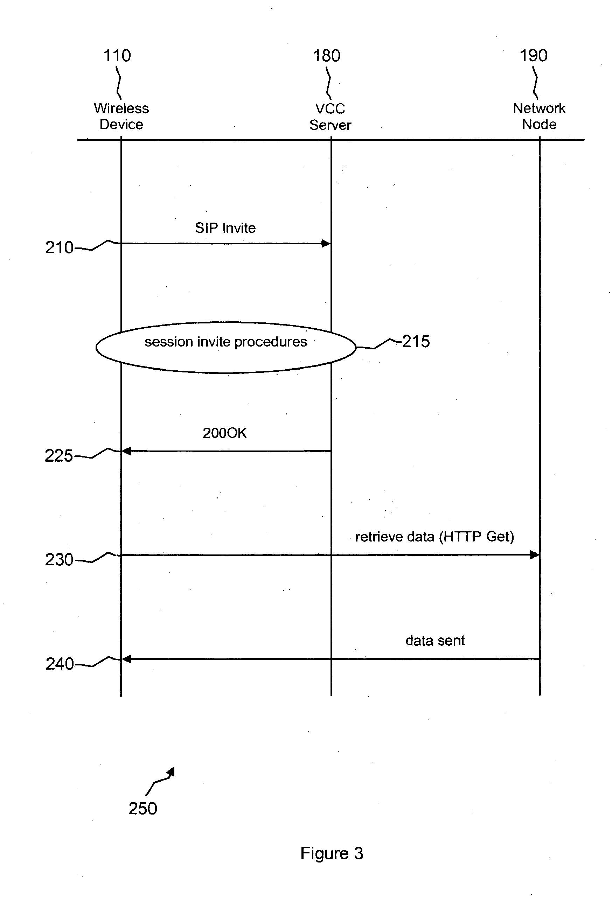

In another alternative where SIP is used as the packet switching protocol, the VDNs can be stored in a network node, retrieved as needed, and assigned on a per-session basis. Figure 3 is a call flow diagram 250 depicting an example of a series of events that might occur in such an embodiment. At event 210, the wireless device 110 sends a SIP Invite message to the VCC server 180. Standard SIP session invite procedures then occur at event 215. When the standard invite procedures are complete, the VCC server 180 sends the wireless device 110 a SIP 2000K message at event 225. The SIP 2000K message can include information regarding where and how a VDN can be retrieved, as described below. At event 230, the wireless device 110 sends a message to a network node 190 where a depository might maintain a pool of VDNs. The message might be a hypertext transfer protocol (HTTP) Get message or a similar message that can retrieve a VDN from the depository. At event 240, the network node 190 sends the wireless device 110 a VDN from the depository that can be used on a per-session basis. The wireless device 110 can store the information received from the depository in either internal memory or external removable memory.

The following code might be included in the SIP 2000K message that is sent at event 225 and that specifies where and how a VDN can be retrieved. It should be understood that this code is provided only as an example and that one of skill in the art might recognize other syntax that might perform a similar function.
Content-Type: message/external-body;
   ACCESS-TYPE=URL;
   URL="http://www.homenetworknode.com/VCCdata/privateuserid";
   EXPIRATION="Sat, 20 Jun 2002 12:00:00 GMT";
   size=231
Content-Length: 105
Content-Disposition: CS VCC session
Content-ID: <4e5562cd1214427d@homenetworknode.com>

The URL (Universal Resource Locator) points to the depository in the network node 190 where the pool of VDNs is maintained. The URL has been constructed so that it has some relationship to the wireless device 110 by incorporating the 'privateuserID' identifier. This identifier could be an International Mobile Subscriber Identity (IMSI), an IMS Private User Identity, a Personal Identification Number, a Mobile Directory Number (MDN), an Electronic Serial Number (ESN), an International Mobile Equipment Identity (IMEI), a Mobile Equipment IDentifier (MEID), or a similar user identification number. The expiration date informs the wireless device 110 when the information will expire. The 'size' parameter indicates the size of the data to be retrieved. The 'content-disposition' parameter indicates that the data is for circuit switched (CS) VCC sessions.

When the VCC server 180 includes this information, or similar information, in the SIP 2000K message that it sends to the wireless device 110 at event 225, the wireless device 110 is made aware of how it can retrieve a session-based VDN from the network node 190 and can store the information it receives. Further details on the assignment of VDNs in this manner can be found in U.S. patent application number 11/740,102, filed 04/25/2007, entitled "System and Method for Originating a SIP Call via a Circuit-Switched Network from a User Equipment Device", U.S. patent application number 11/542,462, filed 10/03/2006, entitled "System and Method for Managing Call Continuity in IMS Network Environment Using SIP Messaging", and U.S. patent application number 11/328,875, filed 01/10/2006, entitled "System and Method for Managing Call Routing in a Network Environment Including IMS", all of which are herein incorporated by reference for all purposes. However, it should be understood that the assignment of session-based VDNs is not limited to the techniques described in the cited patent applications and that other manners of assigning VDNs on a per-session basis could be used.

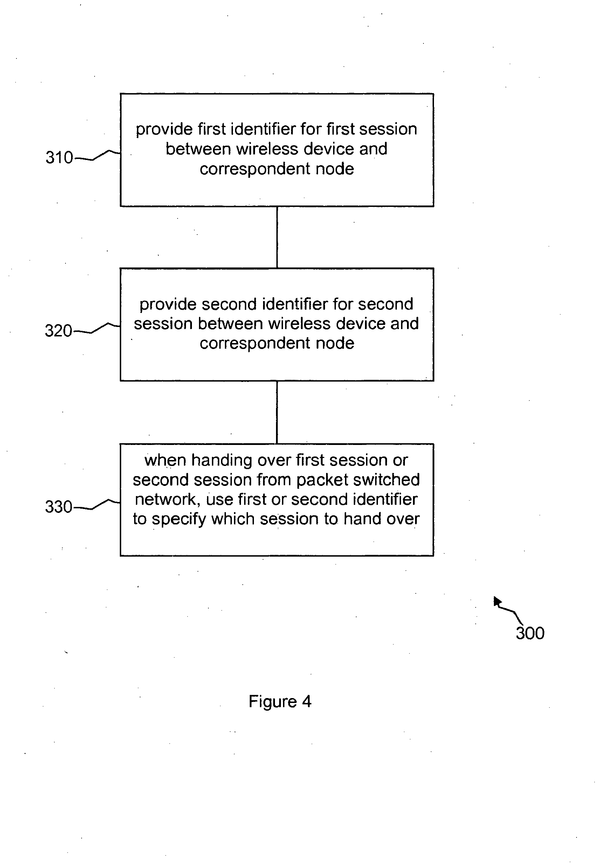

Figure 4 illustrates an embodiment of a method 300 for handing over a session between networks. At block 310, a first identifier for a first session between a wireless device and a correspondent node is provided. At block 320, a second identifier for a second session between the wireless device and the correspondent node is provided. In some embodiments, the first and second identifiers might be generated specifically for the purpose of identifying packet switched sessions. In other embodiments, the first and second identifiers might be previously existing identifiers such as SIP Call-ID parameters. In still other embodiments, the first and second identifiers might be VDNs that identify sessions rather than wireless devices. At block 330, when one of the first and second sessions is handed over from a packet switched network to a circuit switched network or from a packet switched network to a different packet switched network, one of the first and second identifiers is used to specify which of the first and second sessions to hand over.

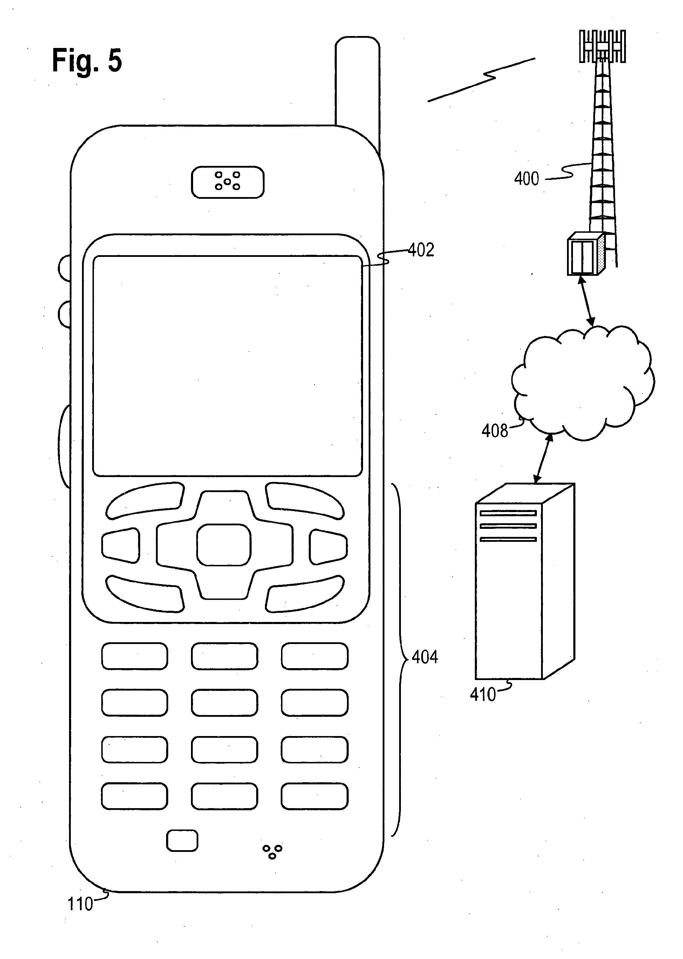

Figure 5 illustrates a wireless communications system including an embodiment of the wireless device 110. The wireless device 110 is operable for implementing aspects of the disclosure, but the disclosure should not be limited to these implementations. Though illustrated as a mobile phone, the wireless device 110 may take various forms including a wireless handset, a pager, a personal digital assistant (PDA), a portable computer, a tablet computer, or a laptop computer. Many suitable devices combine some or all of these functions. In some embodiments of the disclosure, the wireless device 110 is not a general purpose computing device like a portable, laptop or tablet computer, but rather is a special-purpose communications device such as a mobile phone, wireless handset, pager, or PDA. In another embodiment, the wireless device 110 may be a portable, laptop or other computing device. The wireless device 110 may support specialized activities such as gaming, inventory control, job control, and/or task management functions, and so on.

The wireless device 110 includes a display 402. The wireless device 110 also includes a touch-sensitive surface, a keyboard or other input keys generally referred as 404 for input by a user. The keyboard may be a full or reduced alphanumeric keyboard such as QWERTY, Dvorak, AZERTY, and sequential types, or a traditional numeric keypad with alphabet letters associated with a telephone keypad. The input keys may include a trackwheel, an exit or escape key, a trackball, and other navigational or functional keys, which may be inwardly depressed to provide further input function. The wireless device 110 may present options for the user to select, controls for the user to actuate, and/or cursors or other indicators for the user to direct. The wireless device 110 may further accept data entry from the user, including numbers to dial or various parameter values for configuring the operation of the wireless device 110. The wireless device 110 may further execute one or more software or firmware applications in response to user commands. These applications may configure the wireless device 110 to perform various customized functions in response to user interaction. Additionally, the wireless device 110 may be programmed and/or configured over-the-air, for example from a wireless base station, a wireless access point, or a peer wireless device 110.

Among the various applications executable by the wireless device 110 are a web browser, which enables the display 402 to show a web page. The web page may be obtained via wireless communications with a wireless network access node, a cell tower, a peer wireless device 110, or any other wireless communication network or system 400. The network 400 is coupled to a wired network 408, such as the Internet. Via the wireless link and the wired network, the wireless device 110 has access to information on various servers, such as a server 410. The server 410 may provide content that may be shown on the display 402. Alternately, the wireless device 110 may access the network 400 through a peer wireless device 110 acting as an intermediary, in a relay type or hop type of connection.

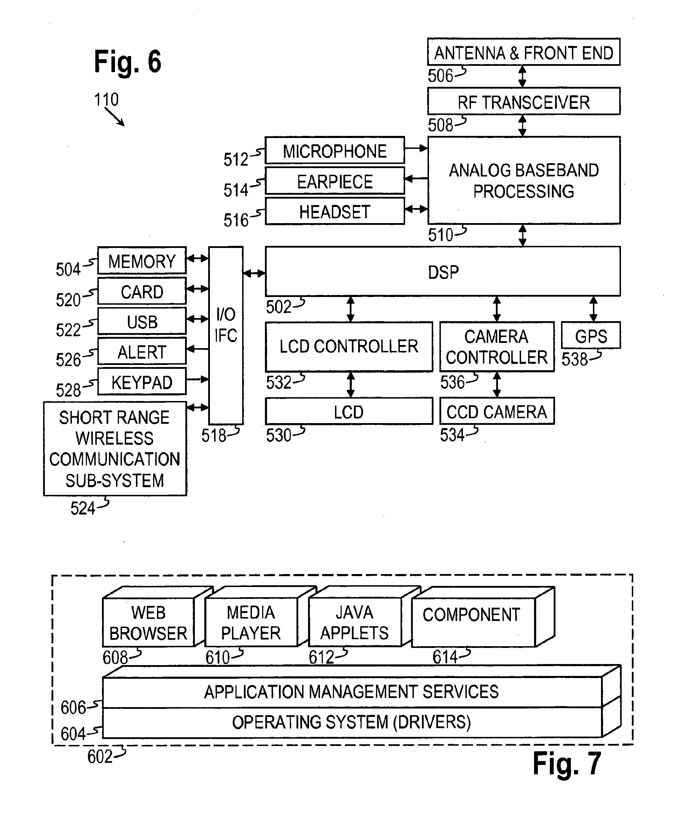

Figure 6 shows a block diagram of the wireless device 110. While a variety of known components of wireless devices 110 are depicted, in an embodiment a subset of the listed components and/or additional components not listed may be included in the wireless device 110. The wireless device 110 includes a digital signal processor (DSP) 502 and a memory 504. As shown, the wireless device 110 may further include an antenna and front end unit 506, a radio frequency (RF) transceiver 508, an analog baseband processing unit 510, a microphone 512, an earpiece speaker 514, a headset port 516, an input/output interface 518, a removable memory card 520, a universal serial bus (USB) port 522, a short range wireless communication sub-system 524, an alert 526, a keypad 528, a liquid crystal display (LCD), which may include a touch sensitive surface 530, an LCD controller 532, a charge-coupled device (CCD) camera 534, a camera controller 536, and a global positioning system (GPS) sensor 538. In an embodiment, the wireless device 110 may include another kind of display that does not provide a touch sensitive screen. In an embodiment, the DSP 502 may communicate directly with the memory 504 without passing through the input/output interface 518.

The DSP 502 or some other form of controller or central processing unit operates to control the various components of the wireless device 110 in accordance with embedded software or firmware stored in memory 504 or stored in memory contained within the DSP 502 itself. In addition to the embedded software or firmware, the DSP 502 may execute other applications stored in the memory 504 or made available via information carrier media such as portable data storage media like the removable memory card 520 or via wired or wireless network communications. The application software may comprise a compiled set of machine-readable instructions that configure the DSP 502 to provide the desired functionality, or the application software may be high-level software instructions to be processed by an interpreter or compiler to indirectly configure the DSP 502.

The antenna and front end unit 506 may be provided to convert between wireless signals and electrical signals, enabling the wireless device 110 to send and receive information from a cellular network or some other available wireless communications network or from a peer wireless device 110. In an embodiment, the antenna and front end unit 506 may include multiple antennas to support beam forming and/or multiple input multiple output (MIMO) operations. As is known to those skilled in the art, MIMO operations may provide spatial diversity which can be used to overcome difficult channel conditions and/or increase channel throughput. The antenna and front end unit 506 may include antenna tuning and/or impedance matching components, RF power amplifiers, and/or low noise amplifiers.

The RF transceiver 508 provides frequency shifting, converting received RF signals to baseband and converting baseband transmit signals to RF. In some descriptions a radio transceiver or RF transceiver may be understood to include other signal processing functionality such as modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions. For the purposes of clarity, the description here separates the description of this signal processing from the RF and/or radio stage and conceptually allocates that signal processing to the analog baseband processing unit 510 and/or the DSP 502 or other central processing unit. In some embodiments, the RF Transceiver 508, portions of the Antenna and Front End 506, and the analog baseband processing unit 510 may be combined in one or more processing units and/or application specific integrated circuits (ASICs).

The analog baseband processing unit 510 may provide various analog processing of inputs and outputs, for example analog processing of inputs from the microphone 512 and the headset 516 and outputs to the earpiece 514 and the headset 516. To that end, the analog baseband processing unit 510 may have ports for connecting to the built-in microphone 512 and the earpiece speaker 514 that enable the wireless device 110 to be used as a cell phone. The analog baseband processing unit 510 may further include a port for connecting to a headset or other hands-free microphone and speaker configuration. The analog baseband processing unit 510 may provide digital-to-analog conversion in one signal direction and analog-to-digital conversion in the opposing signal direction. In some embodiments, at least some of the functionality of the analog baseband processing unit 510 may be provided by digital processing components, for example by the DSP 502 or by other central processing units.

The DSP 502 may perform modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions associated with wireless communications. In an embodiment, for example in a code division multiple access (CDMA) technology application, for a transmitter function the DSP 502 may perform modulation, coding, interleaving, and spreading, and for a receiver function the DSP 502 may perform despreading, deinterleaving, decoding, and demodulation. In another embodiment, for example in an orthogonal frequency division multiplex access (OFDMA) technology application, for the transmitter function the DSP 502 may perform modulation, coding, interleaving, inverse fast Fourier transforming, and cyclic prefix appending, and for a receiver function the DSP 502 may perform cyclic prefix removal, fast Fourier transforming, deinterleaving, decoding, and demodulation. In other wireless technology applications, yet other signal processing functions and combinations of signal processing functions may be performed by the DSP 502.

The DSP 502 may communicate with a wireless network via the analog baseband processing unit 510. In some embodiments, the communication may provide Internet connectivity, enabling a user to gain access to content on the Internet and to send and receive e-mail or text messages. The input/output interface 518 interconnects the DSP 502 and various memories and interfaces. The memory 504 and the removable memory card 520 may provide software and data to configure the operation of the DSP 502. Among the interfaces may be the USB interface 522 and the short range wireless communication sub-system 524. The USB interface 522 may be used to charge the wireless device 110 and may also enable the wireless device 110 to function as a peripheral device to exchange information with a personal computer or other computer system. The short range wireless communication sub-system 524 may include an infrared port, a Bluetooth interface, an IEEE 802.11 compliant wireless interface, or any other short range wireless communication sub-system, which may enable the wireless device 110 to communicate wirelessly with other nearby mobile devices and/or wireless base stations.

The input/output interface 518 may further connect the DSP 502 to the alert 526 that, when triggered, causes the wireless device 110 to provide a notice to the user, for example, by ringing, playing a melody, or vibrating. The alert 526 may serve as a mechanism for alerting the user to any of various events such as an incoming call, a new text message, and an appointment reminder by silently vibrating, or by playing a specific pre-assigned melody for a particular caller.

The keypad 528 couples to the DSP 502 via the interface 518 to provide one mechanism for the user to make selections, enter information, and otherwise provide input to the wireless device 110. The keyboard 528 may be a full or reduced alphanumeric keyboard such as QWERTY, Dvorak, AZERTY and sequential types, or a traditional numeric keypad with alphabet letters associated with a telephone keypad. The input keys may include a trackwheel, an exit or escape key, a trackball, and other navigational or functional keys, which may be inwardly depressed to provide further input function. Another input mechanism may be the LCD 530, which may include touch screen capability and also display text and/or graphics to the user. The LCD controller 532 couples the DSP 502 to the LCD 530.

The CCD camera 534, if equipped, enables the wireless device 110 to take digital pictures. The DSP 502 communicates with the CCD camera 534 via the camera controller 536. In another embodiment, a camera operating according to a technology other than Charge Coupled Device cameras may be employed. The GPS sensor 538 is coupled to the DSP 502 to decode global positioning system signals, thereby enabling the wireless device 110 to determine its position. Various other peripherals may also be included to provide additional functions, e.g., radio and television reception.

Figure 7 illustrates a software environment 602 that may be implemented by the DSP 502. The DSP 502 executes operating system drivers 604 that provide a platform from which the rest of the software operates. The operating system drivers 604 provide drivers for the wireless device hardware with standardized interfaces that are accessible to application software. The operating system drivers 604 include application management services ("AMS") 606 that transfer control between applications running on the wireless device 110. Also shown in Figure 7 are a web browser application 608, a media player application 610, and Java applets 612. The web browser application 608 configures the wireless device 110 to operate as a web browser, allowing a user to enter information into forms and select links to retrieve and view web pages. The media player application 610 configures the wireless device 110 to retrieve and play audio or audiovisual media. The Java applets 612 configure the wireless device 110 to provide games, utilities, and other functionality. A component 614 might provide functionality related to session identifiers and might be similar to the component 115 of Figure 1.

While several embodiments have been provided in the present disclosure, it should be understood that the disclosed systems and methods may be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art.

## Claims

1. A system for invoking handover function for handing over a session having a previously existing session identifier from a packet network in a packet switched domain to second network, comprising:
a component configured to assign a unique previously existing session identifier to each of a plurality of sessions between a wireless device and a correspondent system node, wherein one of the previously existing session identifiers is used to identify one of the plurality of sessions to be handed over from a first network in the packet switched domain to a second network.

2. The system of claim 1, wherein the system is configured to use one of the session identifiers to identify a one of the plurality of sessions to be handed over from a packet switched domain to a circuit switched domain.

3. The system of claim 1, wherein the system is configured to use one of the session identifiers to identify a one of the plurality of sessions to be handed over from a packet switched network to another packet switched network.

4. The system of claim 2 or claim 3, wherein the system is configured to include the one of the session identifiers in a handover request transmitted by the wireless device.

5. The system of claim 4, wherein the one of the session identifiers comprises a call identifier 'Call-ID' parameter of a Session Initiation Protocol 'SIP' message.

6. The system of claim 2, wherein the session identifiers comprise voice call continuity domain transfer numbers 'VDNs'.

7. The system of claim 6, wherein the system is configured to include the one of the VDNs that is used to identify the one of the plurality of sessions to be handed over to the circuit switched domain in a SIP 2000K message transmitted from a voice call continuity 'VCC' server to the wireless device.

8. The system of claim 6 or claim 7, wherein the system is configured to store the VDNs in a depository on a network node and to provide the VDNs to the wireless device upon initiation of the sessions.

9. The system of claim 8, wherein the system is configured to transmit a SIP 2000K message from a VCC server to the wireless device including an instruction on the wireless device retrieving from the depository the one of the VDNs that is used to identify the one of the plurality of sessions to be handed over to the circuit switched domain.

10. The system of any one of the preceding claims, wherein the correspondent system node comprises any one of a second wireless device, an element in a telecommunications network, or an automated computing device, and wherein the component resides in any one of the wireless device, a VCC server, or the element in the telecommunications network.

11. The system of claim 1, wherein the system is for handing over a session from a packet switched network to another network, the system further comprising:
the correspondent system node; and
the wireless device, the wireless device having the plurality of sessions with the correspondent system node in the packet switched network, and wherein the component is provided to assign the unique session identifiers to the plurality of sessions.

12. The system of claim 11, wherein the system is configured to use one of the session identifiers to identify which one of the plurality of sessions is handed over to a circuit switched network.

13. The system of claim 11, wherein the system is configured to use one of the session identifiers to identify which one of the plurality of sessions is handed over to a second packet switched network.

14. The system of claim 12, wherein the system is configured to include the one of the session identifiers that is used to identify which one of the plurality of sessions is handed over to the circuit switched network in a handover request transmitted by the wireless device.

15. The system of claim 13, wherein the system is configured to include the one of the session identifiers that is used to identify which one of the plurality of sessions is handed over to the second packet switched network in a handover request transmitted by the wireless device.

16. The system of claim 14 or claim 15, wherein the one of the session identifiers comprises a call identity 'Call-ID' parameter of a Session Initiation Protocol 'SIP' message.

17. The system of claim 12, wherein the session identifiers comprise voice call continuity domain transfer numbers 'VDNs'.

18. The system of claim 17, wherein the system is configured to include the one of the VDNs that is used to identify which one of the plurality of sessions is handed over to the circuit switched network in a SIP 2000K message transmitted from a voice call continuity 'VCC' server to the wireless device.

19. The system of claim 17, wherein the system is configured to store the VDNs in a depository on a network node and to provide the VDNs to the wireless device upon initiation of the sessions.

20. The system of claim 19, wherein the system is configured to transmit a SIP 2000K message from a VCC server to the wireless device including an instruction on the wireless device retrieving from the depository the one of the VDNs that is used to identify the one of the plurality of sessions handed over to the circuit switched network.

21. The system of claim 16, further comprising a component to maintain a relationship between the Call-ID parameter and a VDN.

22. A method for invoking a handover function for handing over a session having a previously existing session identifier from a packet network in a packet switched domain to second network in a system, comprising:
providing prior to invoking said function a first identifier for a first session between a wireless device and a correspondent system node; and
providing prior to invoking said function a second identifier for a second session between the wireless device and the correspondent system node; and
using one of the first identifier and the second identifier to identify one of the first session and the second session to be handed over from a first network in a packet switched domain to a second network.

23. The method of claim 22, when handing over the first or second session from a packet switched network to a circuit switched network, using the first or second identifier to specify which of the first or second sessions to hand over.

24. The method of claim 22, when handing over the first or second session from a packet switched network to another packet switched network, using the first or second identifier to specify which of the first or second sessions to hand over.

25. The method of claim 23 or claim 24, further comprising including the first or second identifier in a handover request transmitted by the wireless device.

26. The method of claim 25, wherein a call identity 'Call-ID' parameter of a Session Initiation Protocol 'SIP' message is used as the first or second identifier.

27. The method of claim 23, wherein the first identifier is a first voice call continuity domain transfer number 'VDN' assigned to the first session and the second identifier is a second VDN assigned to the second session.

28. The method of claim 27, wherein the first VDN or the second VDN is included in a SIP 2000K message transmitted from a voice call continuity 'VCC' server to the wireless device.

29. The method of claim 27 or claim 28, wherein the first VDN or the second VDN is stored in a depository on a network node and is provided to the wireless device upon initiation of the first session or the second session.

30. The method of claim 29, wherein a SIP 2000K message transmitted from a VCC server to the wireless device includes an instruction on the wireless device retrieving the first VDN or the second VDN from the depository.

31. A computer readable medium storing computer readable instructions executable by a processor of a computing system to cause said system to implement the steps of the method of any one of claims 22 to 30.

## Patentansprüche

1. Ein System zum Aufrufen einer Übergabefunktion zur Übergabe einer Sitzung mit einem zuvor existierenden Sitzungsidentifizierer von einem Paketnetzwerk in einer paketvermittelten Domäne zu einem zweiten Netzwerk, das aufweist:
eine Komponente, die konfiguriert ist zum Zuweisen eines eindeutigen zuvor existierenden Sitzungsidentifizierers zu jeder einer Vielzahl von Sitzungen zwischen einer drahtlosen Vorrichtung und einem entsprechenden Systemknoten, wobei einer der zuvor existierenden Sitzungsidentifizierer verwendet wird zum Identifizieren einer der Vielzahl von Sitzungen, die von einem ersten Netzwerk in der paketvermittelten Domäne zu einem zweiten Netzwerk zu übergeben ist.

2. Das System gemäß Anspruch 1, wobei das System konfiguriert ist zur Verwendung eines der Sitzungsidentifizierer, um eine aus der Vielzahl von Sitzungen zu identifizieren, die von einer paketvermittelten Domäne zu einer leitungsvermittelten Domäne zu übergeben ist.

3. Das System gemäß Anspruch 1, wobei das System konfiguriert ist zur Verwendung eines der Sitzungsidentifizierer, um eine aus der Vielzahl von Sitzungen zu identifizieren, die von einem paketvermittelten Netzwerk zu einem anderen paketvermittelten Netzwerk zu übergeben ist.

4. Das System gemäß Anspruch 2 oder Anspruch 3, wobei das System konfiguriert ist, den einen der Sitzungsidentifizierer in eine Übergabeanforderung aufzunehmen, die durch die drahtlose Vorrichtung übertragen wird.

5. Das System gemäß Anspruch 4, wobei der eine der Sitzungsidentifizierer einen Anrufidentifizierer(Call-ID)-Parameter einer SIP(Session Initiation Protocol)-Nachricht aufweist.

6. Das System gemäß Anspruch 2, wobei die Sitzungsidentifizierer VDNs (voice call continuity domain transfer numbers) aufweisen.

7. Das System gemäß Anspruch 6, wobei das System konfiguriert ist zum Aufnehmen der einen der VDNs, die zum Identifizieren der einen der Vielzahl von Sitzungen zur Übergabe an die leitungsvermittelte Domäne verwendet wird, in eine SIP-2000K-Nachricht, die von einem VCC(voice call continuity)-Server an die drahtlose Vorrichtung übertragen wird.

8. Das System gemäß Anspruch 6 oder Anspruch 7, wobei das System konfiguriert ist zum Speichern der VDNs in einem Depot an einem Netzwerkknoten und zum Vorsehen der VDNs an die drahtlose Vorrichtung bei Initiierung der Sitzungen.

9. Das System gemäß Anspruch 8, wobei das System konfiguriert ist zum Übertragen einer SIP-2000K-Nachricht von einem VCC-Server an die drahtlose Vorrichtung, die eine Anweisung umfasst hinsichtlich eines Abrufens, durch die drahtlose Vorrichtung, von dem Depot der einen der VDNs, die zum Identifizieren der einen der Vielzahl von Sitzungen verwendet wird, die an die leitungsvermittelte Domäne zu übergeben ist.

10. Das System gemäß einem der vorhergehenden Ansprüche, wobei der entsprechende Systemknoten eines aus einer zweiten drahtlosen Vorrichtung, einem Element in einem Telekommunikationsnetzwerk oder einer automatisierten Computervorrichtung aufweist, und wobei sich die Komponente in einem der drahtlosen Vorrichtung, einem VCC-Server oder dem Element in dem Telekommunikationsnetzwerk befindet.

11. Das System gemäß Anspruch 1, wobei das System vorgesehen ist zum Übergeben einer Sitzung von einem paketvermittelten Netzwerk zu einem anderen Netzwerk, wobei das System weiter aufweist:
den entsprechenden Systemknoten; und
die drahtlose Vorrichtung, wobei die drahtlose Vorrichtung die Vielzahl von Sitzungen mit dem entsprechenden Systemknoten in dem paketvermittelten Netzwerk hat, und wobei die Komponente vorgesehen ist zu Zuweisen der eindeutigen Sitzungsidentifizierer zu der Vielzahl von Sitzungen.

12. Das System gemäß Anspruch 11, wobei das System konfiguriert ist zum Verwenden eines der Sitzungsidentifizierer zum Identifizieren, welche der Vielzahl von Sitzungen an ein leitungsvermitteltes Netzwerk übergeben wird.

13. Das System gemäß Anspruch 11, wobei das System konfiguriert ist zum Verwenden eines der Sitzungsidentifizierer zum Identifizieren, welche der Vielzahl von Sitzungen an ein zweites paketvermitteltes Netzwerk übergeben wird.

14. Das System gemäß Anspruch 12, wobei das System konfiguriert ist zum Aufnehmen des einen der Sitzungsidentifizierer, der zum Identifizieren verwendet wird, welche der Vielzahl von Sitzungen an das leitungsvermittelte Netzwerk übergeben wird, in eine Übergabeanforderung, die von der drahtlosen Vorrichtung übertragen wird.

15. Das System gemäß Anspruch 13, wobei das System konfiguriert ist zum Aufnehmen des einen der Sitzungsidentifizierer, der zum Identifizieren verwendet wird, welche der Vielzahl von Sitzungen an das zweite paketvermittelte Netzwerk übergeben wird, in eine Übergabeanforderung, die von der drahtlosen Vorrichtung übertragen wird.

16. Das System gemäß Anspruch 14 oder Anspruch 15, wobei der eine der Sitzungsidentifizierer einen Anrufidentitäts(Call-ID)-Parameter einer SIP(Session Initiation Protocol)-Nachricht aufweist.

17. Das System gemäß Anspruch 12, wobei die Sitzungsidentifizierer VDNs (voice call continuity domain transfer numbers) aufweisen.

18. Das System gemäß Anspruch 17, wobei das System konfiguriert ist zum Aufnehmen der einen der VDNs, die zum Identifizieren verwendet wird, welche der Vielzahl von Sitzungen an das leitungsvermittelte Netzwerk übergeben wird, in eine SIP-2000K-Nachricht, die von einem VCC(voice call continuity)-Server an die drahtlose Vorrichtung übertragen wird.

19. Das System gemäß Anspruch 17, wobei das System konfiguriert ist zum Speichern der VDNs in einem Depot an einem Netzwerkknoten und zum Vorsehen der VDNs an die drahtlose Vorrichtung bei Initiierung der Sitzungen.

20. Das System gemäß Anspruch 19, wobei das System konfiguriert ist zum Übertragen einer SIP-2000K-Nachricht von einem VCC-Server an die drahtlose Vorrichtung, die eine Anweisung umfasst hinsichtlich eines Abrufens, durch die drahtlose Vorrichtung, von dem Depot der einen der VDNs, die zum Identifizieren der einen der Vielzahl von Sitzungen verwendet wird, die an das leitungsvermittelte Netzwerk übergeben wird.

21. Das System gemäß Anspruch 16, das weiter eine Komponente aufweist zum Aufrechterhalten einer Beziehung zwischen dem Call-ID-Parameter und einer VDN.

22. Ein Verfahren zum Aufrufen einer Übergabefunktion zur Übergabe einer Sitzung mit einem zuvor existierenden Sitzungsidentifizierer von einem Paketnetzwerk in einer paketvermittelten Domäne zu einem zweiten Netzwerk in einem System, das aufweist:
Vorsehen, vor dem Aufrufen der Funktion, eines ersten Identifizierers für eine erste Sitzung zwischen einer drahtlosen Vorrichtung und einem entsprechenden Systemknoten; und
Vorsehen, vor dem Aufrufen der Funktion, eines zweiten Identifizierers für eine zweite Sitzung zwischen der drahtlosen Vorrichtung und dem entsprechenden Systemknoten; und
Verwenden eines des ersten Identifizierers und des zweiten Identifizierers zum Identifizieren einer der ersten Sitzung und der zweiten Sitzung zur Übergabe von einem ersten Netzwerk in einer paketvermittelten Domäne zu einem zweiten Netzwerk.

23. Das Verfahren gemäß Anspruch 22, bei einer Übergabe der ersten oder zweiten Sitzung von einem paketvermittelten Netzwerk zu einem leitungsvermittelten Netzwerk, Verwenden des ersten oder zweiten Identifizierers, um zu spezifizieren, welche der ersten oder zweiten Sitzungen zu übergeben ist.

24. Das Verfahren gemäß Anspruch 22, bei einer Übergabe der ersten oder zweiten Sitzung von einem paketvermittelten Netzwerk zu einem anderen paketvermittelten Netzwerk, Verwenden des ersten oder zweiten Identifizierers, um zu spezifizieren, welche der ersten oder zweiten Sitzungen zu übergeben ist.

25. Das Verfahren gemäß Anspruch 23 oder Anspruch 24, das weiter ein Aufnehmen des ersten oder zweiten Identifizierers in eine Übergabeanforderung aufweist, die durch die drahtlose Vorrichtung übertragen wird.

26. Das Verfahren gemäß Anspruch 25, wobei ein Anrufidentitäts(Call-ID)-Parameter einer SIP(Session Initiation Protocol)-Nachricht als der erste oder zweite Identifizierer verwendet wird.

27. Das Verfahren gemäß Anspruch 23, wobei der erste Identifizierer eine erste VDN (voice call continuity domain transfer number) ist, die der ersten Sitzung zugewiesen ist, und der zweite Identifizierer eine zweite VDN ist, die der zweiten Sitzung zugewiesen ist.

28. Das Verfahren gemäß Anspruch 27, wobei die erste VDN oder die zweite VDN in einer SIP-2000K-Nachricht enthalten ist, die von einem VCC(voice call continuity)-Server an die drahtlose Vorrichtung übertragen wird.

29. Das Verfahren gemäß Anspruch 27 oder Anspruch 28, wobei die erste VDN oder die zweite VDN in einem Depot an einem Netzwerkknoten gespeichert wird und an die drahtlose Vorrichtung vorgesehen wird bei Initiierung der ersten Sitzung oder der zweiten Sitzung.

30. Das Verfahren gemäß Anspruch 29, wobei eine SIP-2000K-Nachricht, die von einem VCC-Server an die drahtlose Vorrichtung übertragen wird, eine Anweisung umfasst hinsichtlich eines Abrufens, durch die drahtlose Vorrichtung, der ersten VDN oder der zweiten VDN von dem Depot.

31. Ein computerlesbares Medium zum Speichern von computerlesbaren Anweisungen, die durch einen Prozessor eines Computersystems ausführbar sind, um das System zu veranlassen, die Schritte des Verfahrens gemäß einem der Ansprüche 22 bis 30 zu implementieren.

## Revendications

1. Système destiné à appeler une fonction de transfert pour transférer une session ayant un identifiant de session préalablement existant d'un réseau à commutation de paquets dans un domaine à commutation de paquets à un deuxième réseau, comprenant :
un composant configuré pour attribuer un identifiant de session préalablement existant unique à chacune d'une pluralité de sessions entre un dispositif sans fil et un noeud de système correspondant, où l'un des identifiants de session préalablement existants est utilisé pour identifier l'une de la pluralité de sessions à transférer d'un premier réseau dans le domaine à commutation de paquets à un deuxième réseau.

2. Système de la revendication 1, dans lequel le système est configuré pour utiliser l'un des identifiants de session pour identifier l'une de la pluralité de sessions à transférer d'un domaine à commutation de paquets à un domaine à commutation de circuits.

3. Système de la revendication 1, dans lequel le système est configuré pour utiliser l'un des identifiants de session pour identifier l'une de la pluralité de sessions à transférer d'un réseau à commutation de paquets à un autre réseau à commutation de paquets.

4. Système de la revendication 2 ou 3, dans lequel le système est configuré pour inclure l'un des identifiants de session dans une demande de transfert transmise par le dispositif sans fil.

5. Système de la revendication 4, dans lequel l'un des identifiants de session comprend un paramètre d'identifiant d'appel 'Call-ID' d'un message de Protocole d'Initiation de Session 'SIP'.

6. Système de la revendication 2, dans lequel les identifiants de session comprennent des numéros de transfert de domaine de continuité d'appel vocal 'VDN'.

7. Système de la revendication 6, dans lequel le système est configuré pour inclure l'un des VDN qui est utilisé pour identifier l'une de la pluralité de sessions à transférer au domaine à commutation de circuits dans un message SIP 2000K transmis d'un serveur de continuité d'appel vocal 'VCC' au dispositif sans fil.

8. Système de la revendication 6 ou 7, dans lequel le système est configuré pour stocker les VDN dans un dépôt sur un noeud de réseau et pour fournir les VDN au dispositif sans fil lors de l'initiation des sessions.

9. Système de la revendication 8, dans lequel le système est configuré pour transmettre un message SIP 2000K d'un serveur VCC au dispositif sans fil comportant une instruction sur le dispositif sans fil qui extrait à partir du dépôt l'un des VDN qui est utilisé pour identifier l'une de la pluralité de sessions à transférer au domaine à commutation de circuits.

10. Système de l'une quelconque des revendications précédentes, dans lequel le noeud de système correspondant comprend l'un quelconque d'un deuxième dispositif sans fil, d'un élément dans un réseau de télécommunications ou d'un dispositif informatique automatisé, et dans lequel le composant se trouve dans l'un quelconque du dispositif sans fil, d'un serveur VCC ou de l'élément dans le réseau de télécommunications.

11. Système de la revendication 1, dans lequel le système est destiné au transfert d'une session d'un réseau à commutation de paquets à un autre réseau, le système comprenant en outre :
le noeud de système correspondant ; et
le dispositif sans fil, le dispositif sans fil ayant la pluralité de sessions avec le noeud de système correspondant dans le réseau à commutation de paquets, et dans lequel le composant est prévu pour attribuer les identifiants de session uniques à la pluralité de sessions.

12. Système de la revendication 11, dans lequel le système est configuré pour utiliser l'un des identifiants de session pour identifier laquelle parmi la pluralité de sessions est transférée à un réseau à commutation de circuits.

13. Système de la revendication 11, dans lequel le système est configuré pour utiliser l'un des identifiants de session pour identifier laquelle parmi la pluralité de sessions est transférée à un deuxième réseau à commutation de paquets.

14. Système de la revendication 12, dans lequel le système est configuré pour inclure l'un des identifiants de session qui est utilisé pour identifier laquelle parmi la pluralité de sessions est transférée au réseau à commutation de circuits dans une demande de transfert transmise par le dispositif sans fil.

15. Système de la revendication 13, dans lequel le système est configuré pour inclure l'un des identifiants de session qui est utilisé pour identifier laquelle parmi la pluralité de sessions est transférée au deuxième réseau à commutation de paquets dans une demande de transfert transmise par le dispositif sans fil.

16. Système de la revendication 14 ou 15, dans lequel l'un des identifiants de session comprend un paramètre d'identité d'appel 'Call-ID' d'un message de Protocole d'Initiation de Session 'SIP'.

17. Système de la revendication 12, dans lequel lesdits identifiants de session comprennent des numéros de transfert de domaine de continuité d'appel vocal 'VDN'.

18. Système de la revendication 17, dans lequel le système est configuré pour inclure l'un des VDN qui est utilisé pour identifier laquelle parmi la pluralité de sessions est transférée au réseau à commutation de circuits dans un message SIP 2000K transmis d'un serveur de continuité d'appel vocal 'VCC' au dispositif sans fil.

19. Système de la revendication 17, dans lequel le système est configuré pour stocker les VDN dans un dépôt sur un noeud de réseau et pour fournir les VDN au dispositif sans fil lors de l'initiation des sessions.

20. Système de la revendication 19, dans lequel le système est configuré pour transmettre un message SIP 2000K d'un serveur VCC au dispositif sans fil comportant une instruction sur le dispositif sans fil qui extrait à partir du dépôt l'un des VDN qui est utilisé pour identifier la session parmi la pluralité de sessions transférée au réseau à commutation de circuits.

21. Système de la revendication 16, comprenant en outre un composant pour maintenir une relation entre le paramètre Call-ID et un VDN.

22. Procédé destiné à appeler une fonction de transfert pour transférer une session ayant un identifiant de session préalablement existant d'un réseau à commutation de paquets dans un domaine à commutation de paquets à un deuxième réseau dans un système, comprenant le fait :
de fournir avant d'appeler ladite fonction un premier identifiant pour une première session entre un dispositif sans fil et un noeud de système correspondant ; et
de fournir avant d'appeler ladite fonction un deuxième identifiant pour une deuxième session entre le dispositif sans fil et le noeud de système correspondant ; et
d'utiliser l'un du premier identifiant et du deuxième identifiant pour identifier l'une de la première session et de la deuxième session à transférer d'un premier réseau dans un domaine à commutation de paquets à un deuxième réseau.

23. Procédé de la revendication 22, lors du transfert de la première session ou de la deuxième session d'un réseau à commutation de paquets à un réseau à commutation de circuits, utilisant le premier identifiant ou le deuxième identifiant pour spécifier laquelle de la première session ou de la deuxième session doit être transférée.

24. Procédé de la revendication 22, lors du transfert de la première session ou de la deuxième session d'un réseau à commutation de paquets à un autre réseau à commutation de paquets, utilisant le premier identifiant ou le deuxième identifiant pour spécifier laquelle de la première session ou de la deuxième session doit être transférée.

25. Procédé de la revendication 23 ou 24, comprenant en outre le fait d'inclure le premier identifiant ou le deuxième identifiant dans une demande de transfert transmise par le dispositif sans fil.

26. Procédé de la revendication 25, dans lequel un paramètre d'identité d'appel 'Call-ID' d'un message de Protocole d'Initiation de Session 'SIP' est utilisé comme étant le premier identifiant ou le deuxième identifiant.

27. Procédé de la revendication 23, dans lequel le premier identifiant est un premier numéro de transfert de domaine de continuité d'appel vocal 'VDN' attribué à la première session et le deuxième identifiant est un deuxième VDN attribué à la deuxième session.

28. Procédé de la revendication 27, dans lequel le premier VDN ou le deuxième VDN est inclus dans un message SIP 2000K transmis d'un serveur de continuité d'appel vocal 'VCC' au dispositif sans fil.

29. Procédé de la revendication 27 ou 28, dans lequel le premier VDN ou le deuxième VDN est stocké dans un dépôt sur un noeud de réseau et est fourni au dispositif sans fil lors de l'initiation de la première session ou de la deuxième session

30. Procédé de la revendication 29, dans lequel un message SIP 2000K transmis d'un serveur VCC au dispositif sans fil comporte une instruction sur le dispositif sans fil qui extrait le premier VDN ou le deuxième VDN à partir du dépôt.

31. Support lisible par ordinateur stockant des instructions lisibles par ordinateur pouvant être exécutées par un processeur d'un système informatique pour amener ledit système à mettre en oeuvre les étapes du procédé de l'une quelconque des revendications 22 à 30.
